# EUROPEAN PATENT APPLICATION

(11) **EP 3 461 346 A1**
(43) Date of publication of application: **03.04.2019**
(21) Application number: 17020450.7
(22) Date of filing: 30.09.2017
(51) Int. Cl.: A23L 23/10, A23L 27/10, A23L 27/00

(54) **METHOD AND FORMULATION FOR SOUP BROTH IN A SEMI-PERMEABLE SACK**

(71) Applicant: Helfend, Jody Michael, Calabasas, CA 91302 (US)
(72) Inventor: Helfend, Jody Michael, Calabasas, CA 91302 (US)
(74) Representative: FRKelly

(57) **Abstract**

A method and formulation for soup broth packed in a semi-permeable sack for storage and later use as consumable soup when combined with water. The formulation consists of a flavor component, a seasoning blend, and a semi-permeable sack. The method involves mixing flavor components and a seasoning into a paste, solidifying the paste, cooking and drying it and then grinding it into hardened particles. The hardened particles are then packaged into a semi-permeable sack like a tea bag or similar to a tea bag, using tea packaging equipment.

## Description

### Field of the Invention

The present invention relates to a method and formulation for soup broth packed in a semi-permeable sack for storage and later use as consumable soup when combined with water.

### Background

The current soup broth base and soup bullion industry is a mature industry with sales well over $4 billion per year. Chefs use soup broth bases in restaurants and hotels to cook soups, sauces, and gravies. The soup broth bases are typically packed in 1 lb., 5-10 lb., or 40 lb. plastic containers. Consumers also buy powdered soup broth bases to add flavor to soups, sauces, and gravies. They are typically packed in metal cans, plastic jars, or paper containers. In the retail trade, powdered bases, bullion cubes, and K-cups are available and familiar to retail customers including Knorr and Swiss.

A soup broth formulation packed into a semi-permeable sack, similar to a tea bag, that is ready to consume with the addition of water, has not existed prior to the present invention because no food manufacturer has produced a soup broth formula that complies with tea packing equipment, in addition to other steps disclosed herein. Some manufacturers market "sipping soups," which contain traditional, dried tea leaves combined with savory seasonings. However, they are physically produced with dried tea leaves rather than a soup broth concentrate. Other manufacturers created concentrated soup broths in the form of dry powders, wet pastes, or bouillon cubes, none of which are compatible with tea packing equipment. Tea packing equipment utilizes a hopper and auger system, which sifts through dried pieces and stems of tea leaves to gravity-fill a tea bag. The typical chicken soup broth base contains chicken fat and/or chicken meat, as well as other ingredients, which makes the finished broth concentrate hygroscopic. Even when packed as a "powder", today's soup broth powders attract moisture during the packing process. The powder lumps up and sticks to the sides of the hopper and auger system, preventing the product from being filled into a semi-permeable sack.

One challenge in creating a soup broth concentrate packed into a semi-permeable sack is creating a non-hygroscopic product in crystallized form, similar to freeze-dried coffee. Soup broths are typically composed of a flavor concentrate, such as chicken, beef, seafood, or vegetable, and a dried seasoning. Flavor concentrates are available in either powder or liquid form. These flavor concentrates are used in the production of a completely concentrated soup broth base such as a chicken base or vegetable base. A soup broth formula typically contains 2-5% flavor concentrate. The inventor and other soup base manufacturers often will cook proteins such as chicken, beef, or vegetables in kettles, grind the cooked ingredients into a designated size, and then mix the hot ingredients with the flavor concentrates into a blender along with other seasonings such as salt and pepper. If the soup base manufacturer produces a paste soup broth base by cooking proteins that are filled with moisture, either a liquid flavor concentrate or a powdered flavor concentrate may be used. On the other hand, if the soup broth base manufacturer produces drier powder soup bases, a powdered flavor concentrate will typically be used. In either case, the flavor concentrate does not need to be hygroscopic. Due to their hygroscopic nature, current forms of soup broth bases will not flow through a traditional hopper and auger used to fill tea bags.

The purpose of the present invention is to develop a new physical form of soup broth base as hardened soup broth granules, without tea leaves, that can be packed into a tea bag or a semi-permeable sack. The sack may be placed in a cup of hot water and steeped for approximately 1-2 minutes, then served as an individual serving of flavored broth.

### Brief Description of the Drawings

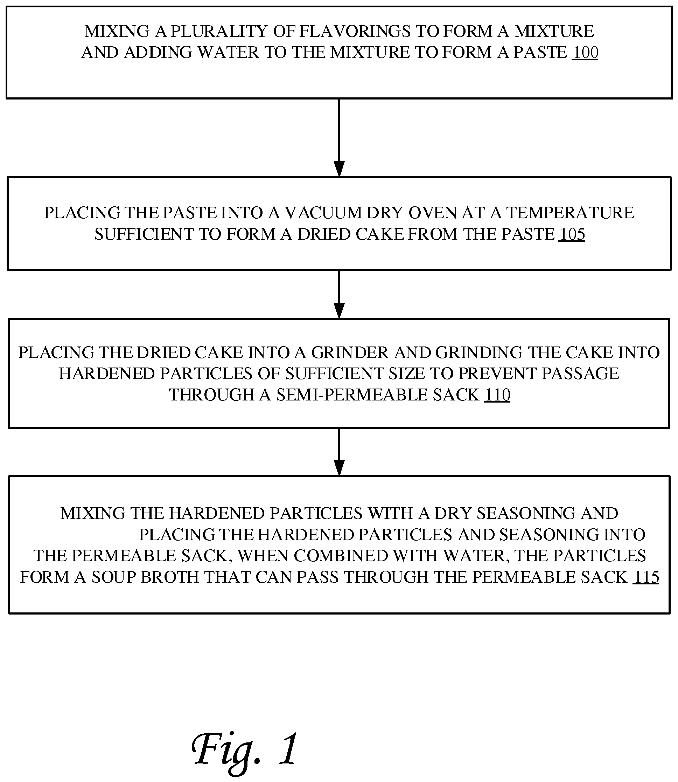

Fig. 1 is a flow chart of a method and formulation for soup broth in a semi-permeable sack.

### Brief Summary of the Embodiments of the Invention

A formulation for a soup broth comprises a flavor component, a seasoning blend and a semi-permeable sack. The flavor component and seasoning blend are formed into hardened granules. In a variant, the flavor component and seasoning blend are baked and cooked into hardened granules, and are inside the semi-permeable sack and granules are both sized so that the granules cannot pass through the sack unless combined with water. The formulation forms a soup broth when combined with water.

In a variant, the soup broth comprises hardened particles comprised of concentrated flavor components.

In another variant, the flavoring component and seasoning blend are cooked at a temperature and duration sufficient to permit flavor to develop and extract at least 97% of the moisture content and form a hardened particle which can be packed into teabags with traditional tea packing equipment.

In a further variant, a method of preparing a formulation for a soup broth, from a flavor component, a seasoning, and a semi-permeable sack, comprises: mixing the flavor component and seasoning into a paste; cooking and grinding the paste into hardened particles; placing the hardened particles into the semi-permeable sack, wherein the particles and the sack are sized to prevent passage of the particles through the sack and allows passage of the particles when combined with water.

In a variant, the paste is placed into a vacuum dry oven and heated to at least 180°F.

In another variant, the hardened particles are mesh size 10 and contain between 2-3% moisture.

In a further variant, between 2.5 grams - 18 grams of the hardened particles fit inside a semi-permeable sack in the size of a tea bag.

In yet another variant, a soup broth is formed when the semi-permeable sack containing the hardened particles is steeped in water, with a dilution ratio of 1 teaspoon hardened particles to 6-12 ounces of water.

In still a further variant, the hardened particles are packaged into a semi-permeable sack using tea-packing equipment for tea leaves.

In a variant, the solid paste is grinded into hardened particles using a grinder.

In another variant, the method comprises passing the paste through a screen that is sized to produce hardened particles sized to prevent passage through the semi-permeable sack before being combined with water, and permit passage through the semi-permeable sack when combined with water.

In a further variant, a method of preparing a formulation for a soup broth, from a flavor component, a seasoning, and a semi-permeable sack, comprises: mixing the flavor component and seasoning into a paste; heating the paste; solidifying and grinding the paste into hardened particles via grinder and passing the paste through a screen that is sized to produce hardened particles sized to properly fit inside the semi-permeable sack; blending the particles with seasoning; and placing the particles and seasoning into the semi-permeable sack using tea-packing equipment for tea leaves.

In yet another variant, a method of preparing a soup broth from a semi-permeable sack, comprises: mixing a plurality of flavorings to form a mixture; adding water to the mixture to form a paste; placing the paste into a vacuum dry oven at a temperature sufficient to form a dried cake from the paste; placing the dried cake into a grinder and grinding the cake into hardened particles of sufficient size to prevent passage through the semi-permeable sack; mixing the hardened particles with a dry seasoning; and placing the hardened particles and seasoning into the semi-permeable sack. When combined with water, the particles form a soup broth that can pass through the semi-permeable sack.

In still a further variant, the step of placing the paste into a vacuum dry oven comprises placing the paste into an oven at a temperature and duration sufficient to remove 97-98% of moisture content from the paste.

In a variant, the step of placing the paste into a vacuum dry oven comprises placing the paste into an oven at temperature ranges between 180-220°F.

In another variant, the step of placing the dried cake into a grinder comprises grinding the cake into particles no smaller than mesh size 10.

In a further variant, the particles have a moisture content of 2-3%.

In still another variant, the method comprises packing the hardened particles into a pail, placing the pail into a tea bagging machine, and packing via a hopper and an auger in amounts of 2.5g-18g into a tea bag.

In yet a further variant, the permeable sack is placed into a cup containing water heated between 130-165°F.

### Detailed Description of the Embodiments of the Invention

A method and formulation for soup broth in a semi-permeable sack is disclosed. In a variant, a flavor component and seasoning are mixed with water to create a paste. The flavor component and seasoning blend are formed into hardened granules as follows. The paste is placed on trays in a vacuum drying oven, heated to at least 210°F and dried until the product comes out as a completely dry cake. In one example, the heating and drying step may require four hours. The dried cake is then put into a grinder with a specific size screen so as to produce exact sized hardened soup broth granules. The hardened soup broth granules, which have a concentrated savory or vegetable flavor, are then mixed in a ribbon blender with other dry seasonings to produce a concentrated broth with a full set of flavors required to be a broth. The dried blend of hardened particles is then packaged into a semi-permeable sack using tea packaging equipment. Semi-permeable means the sack is only permeable to the dried contents when they are combined with water, but when in their dried state as dry granules, they cannot pass through the sack.

In another variant, the finished product is a semi-permeable sack filled with an individual serving of chicken or vegetable base broth, which is diluted in water, heated, and served. The dilution ratio of the hardened particles to water is approximately 1 teaspoon to 6 ounces of hot water. The semi-permeable sack contains approximately 2.5 - 4 grams of hardened particles. This range can be as high as 18 grams in a single sack.

A goal of the present invention is to use a particular cooking technique, vacuum drying, to create the desired savory or vegetable flavors needed for broth and to remove all water from the finished soup broth concentrate.

A method of preparing a dehydrated soup broth in a tea bag, comprises the following steps. Referring to Fig. 1, a flavor component and a seasoning blend is mixed together to form a mixture. Water is added to the mixture to form a paste at step 100. The paste is placed into a metal tray. The metal tray is placed into a vacuum dry oven at a temperature ranging between 180-220°F, to form a dried cake from the paste at step 105, to activate the flavor component, and to remove 97-98% of moisture content from the paste. In one example, this requires four hours. The dried cake is placed into a grinder to be ground into hardened particles of mesh size 10 and of 2-3% moisture content. The particles are ground to sufficient size to prevent passage through the semi-permeable sack at step 110. The hardened particles are mixed with a dry seasoning. The hardened particles are packed into a pail. The pail is shipped to a tea bag packer. The pail, containing the hardened particles, is placed into a tea bagging machine. The hardened particles are packed via a hopper and auger in amounts of 2.5-18 grams into a tea bag at step 115. The hardened particles contained in the tea bag are placed into a cup containing water heated between 165 - 212°F, but preferably 212°F. The hardened particles are steeped in the cup containing the water for 1-3 minutes.

In another variant, a method and formulation for partly dehydrated soup broth in a semi-permeable sack is disclosed. In a variant, a yeast extract and water is mixed to form a paste. The yeast extract paste is slow cooked for approximately 4 hours at between 180 - 220 degrees F for the purpose of creating a roasted and savory flavor from the vegetarian paste and changing the state from a viscous paste to a hardened crystalized particle or nugget capable of being packing by a tea packing machine, by dehydrating a minimum of 98% of the moisture. The flavor may be changed to chicken or beef by adding appropriate seasonings in later steps. The paste is then placed on trays in a vacuum drying oven, heated to between about 180 - 220 °F and dried until the product comes out as a completely dry cake. In one example, the heating and drying step may require four hours. The dried cake is then put into a grinder with a specific size screen so as to produce exact sized hardened soup broth granules. The hardened soup broth granules, which have a concentrated savory or vegetable flavor, will then be mixed in a ribbon blender with other dry seasonings to produce a concentrated broth with a full set of flavors required to be a broth. The dried blend of hardened particles is then packaged into a semi-permeable sack using tea packaging equipment. Semi-permeable means the sack is only permeable to the dried contents when they are combined with water, but when in their dried state as dry granules, they cannot pass through the sack.

## Claims

1. A formulation for a soup broth, **characterized by**:
a flavor component;
a seasoning blend;
a semi-permeable sack;
wherein the flavor component, and seasoning blend are formed into hardened granules, and are inside the semi-permeable sack and granules and the sack are both sized so that the granules cannot pass through the sack unless combined with water; and
wherein the formulation forms a soup broth when combined with water.

2. The soup broth of claim 1, **characterized in that** the flavor component, and seasoning blend are cooked into hardened granules.

3. The soup broth of any preceding claim, **characterized in that** the flavoring component and seasoning blend are cooked at a temperature and duration sufficient to permit flavor to develop and extract at least 97% of the moisture content and form a hardened particle which can be packed into teabags with traditional tea packing equipment.

4. The soup broth of any preceding claim, **characterized in that** the flavor component comprises a yeast extract and wherein the soup broth comprises hardened particles comprised of concentrated flavor components and.

5. A method of preparing a formulation for a soup broth, from a flavor component, a seasoning, and a semi-permeable sack, **characterized by**:
mixing the flavor component and seasoning into a paste;
cooking and grinding the paste into hardened particles;
placing the hardened particles into the semi-permeable sack, wherein the particles and the sack are sized to prevent passage of the particles through the sack and allow for passage of the particles through the semi-permeable sack when combined with water.

6. The method of claim 5, **characterized in that** the paste is placed into a vacuum dry oven and heated to at least 180°F; and wherein the hardened particles are mesh size 10 and contain between 2-3% moisture.

7. The method of any of claims 5-6, **characterized in that** the flavor component contains a yeast extract; and wherein a soup broth is formed when the semi-permeable sack containing the hardened particles is steeped in water, with a dilution ratio of 1 teaspoon hardened particles to 6 - 12 ounces of water.

8. The method of any of claims 5-7, **characterized in that** the hardened particles are packaged into a semi-permeable sack using tea-packing equipment for tea leaves.

9. The method of any of claims 5-8, **characterized in that** the solid paste is grinded into hardened particles using a grinder; and passing the paste through a screen that is sized to produce hardened particles sized to prevent passage through the semi-permeable sack before being combined with water, and permit passage through the semi-permeable sack when combined with water.

10. The method of any of claims 5-9, **characterized by**:
solidifying and grinding the paste into hardened particles via a grinder and passing the paste through a screen that is sized to produce hardened particles sized to prevent passage through the semi-permeable sack before being combined with water, and permit passage through the semi-permeable sack when combined with water;
blending the particles with seasoning;
placing the particles and seasoning into the semi-permeable sack using tea-packing equipment for tea leaves.

11. A method of preparing a dehydrated soup broth in a semi-permeable sack, **characterized by**:
mixing a plurality of flavorings to form a mixture;
adding water to the mixture to form a paste;
placing the paste into a vacuum dry oven at a temperature sufficient to form a dried cake from the paste;
placing the dried cake into a grinder and grinding the cake into hardened particles of sufficient size to prevent passage through the semi-permeable sack;
mixing the hardened particles with a dry seasoning; and
placing the hardened particles and seasoning into the semi-permeable sack;
wherein when combined with water, the particles form a soup broth that can pass through the semi-permeable sack.

12. The method of claim 11, **characterized in that** the step of placing the paste into a vacuum dry oven comprises placing the paste into an oven at a temperature and duration sufficient to remove 97-98% of moisture content from the paste.

13. The method of any of claims 11-12, **characterized in that** the temperature ranges between 180-220°F; wherein step of placing the dried cake into a grinder comprises grinding the cake into particles no larger than mesh size 10; and wherein the particles have a moisture content of 2-3%.

14. The method of any of claims 11-13, **characterized by** packing the hardened particles into a pail; placing the pail into a tea bagging machine; and packing via a hopper and an auger in amounts of 2.5g-18g into a tea bag.

15. A method of preparing soup, **characterized in that** the method of preparing a dehydrated soup broth in a semi-permeable sack of claim 11, comprising placing the permeable sack into a cup containing water heated between 165-212°F.
